# FASCICULE DE BREVET EUROPEEN

(11) **EP 0 508 868 B1**
(45) Date de publication et mention de la délivrance du brevet: **20.11.1996**
(21) Numéro de dépôt: 92400946.7
(22) Date de dépôt: 03.04.1992
(51) Int. Cl.: G01K 5/48, G12B 1/00, G12B 1/02, H01H 43/30, F03G 7/06

(54) **Dispositif pour compter des cycles de dépassement d'un seuil de température, et appareil chauffant comportant un tel dispositif**
Zyklenzählvorrichtung für das Überschreiten einer bestimmten Temperaturschwelle und Heizungsapparat mit so einer Vorrichtung
Device to count the cycles of crossing a certain temperature-value and heating apparatus with such a device

(30) Priorité: 05.04.1991 FR 9104174
(43) Date de publication de la demande: 14.10.1992
(73) Titulaire: SEB S.A., F-21260 Selongey (FR)
(72) Inventeur: Dumoux, Philippe, F-21260 Selongey (FR); Gaudez, Philippe, F-21000 Dijon (FR)
(74) Mandataire: Michelet, Alain

(56) Documents cités:
- WO-A-88/01780
- DE-B- 1 274 259
- GB-A- 2 168 810
- PATENT ABSTRACTS OF JAPAN, vol. 7, no. 169 (M-231)[1314], 26 juillet 1983; & JP-A-58 074 879 (WASEDA DAIGAKU et al.) 06-05-1983

## Description

La présente invention concerne un dispositif pour compter des cycles de dépassement d'un seuil de température.

La présente invention concerne également un appareil chauffant comportant un tel dispositif.

On connaît par exemple des systèmes à transformation irréversible de matière par voie chimique, capables d'indiquer soit un unique franchissement d'un seuil de température, soit plusieurs franchissements de ce seuil, par exemple par un changement de couleur immédiat ou progressif. Ces appareils sont du type à jeter après utilisation, et ne sont pas adaptés à un fonctionnement durable sur un appareil que l'on doit entretenir régulièrement, et par exemple sur une friteuse pour laquelle on doit, après un certain nombre d'utilisations, changer l'huile de friture, et/ou le filtre à odeurs.

Le dispositif connu du document DE-B-1 274 259 ne permet pas de compter des cycles d'utilisation, il provoque le déclenchement du grille-pain dès que la température affichée a été atteinte. Ce dispositif ne permet pas une remise à zéro après un nombre défini d'utilisations.

On connaît également, d'après le FR - A - 2 637 370 ou le PCT/FR 89 00510, un dispositif dont l'élément moteur est un ressort réalisé en un alliage à mémoire de forme et associé à un piston et à une tige qui agit sur un élément de signalisation tel qu'une roue dentée.

Ce dispositif est irréversible, ce qui est un inconvénient dans de nombreuses utilisations possibles. Ce dispositif est adapté à surveiller des températures basses, ou le maintien de la chaîne du froid pour les produits alimentaires ; il a ainsi une structure relativement complexe qui n'est pas adaptée à fonctionner dans une ambiance chaude et est susceptible de se déformer à la longue du fait des cycles de température. Enfin, ce dispositif n'est pas adapté à un fonctionnement durable pour surveiller les conditions d'utilisation, en vue d'en permettre l'entretien régulier, d'un appareil, notamment d'un appareil culinaire tel qu'une friteuse ou analogue.

La présente invention a pour but de remédier aux inconvénients des dispositifs connus, et de proposer un dispositif du type précité qui soit très simple et robuste, peu onéreux, extrêmement fiable, susceptible d'être remis à zéro à volonté,capable de fonctionner durablement dans un environnement chaud, particulièrement adapté aux conditions d'utilisation difficiles que l'on rencontre sur de nombreux appareils, notamment un appareil culinaire tel qu'une friteuse.

Le dispositif du type précité, visé par l'invention, pour compter des cycles de dépassement d'un seuil de température prédéterminé, comporte un élément sensible à la chaleur susceptible de changer de forme lorsque la température s'élève au-dessus dudit seuil de température prédéterminé et agencé de manière à reprendre sensiblement sa forme initiale lorsque la température retombe au-dessous dudit seuil, un élément de signalisation destiné à compter le nombre desdits cycles de dépassement dudit seuil et comprenant au moins un secteur de roue dentée, et des moyens pour faire tourner d'un cran le secteur denté lors de la déformation de l'élément sensible à la chaleur.

Suivant l'invention, ce dispositif est caractérisé en ce que le secteur denté est associé à un échappement, et tourne dans un sens tel que l'échappement est possible, et en ce que l'élément sensible à la température est situé à proximité dudit appareil chauffant et coopère avec des moyens l'obligeant à reprendre sa forme initiale à la température ordinaire en formant avec lesdits moyens un assemblage dont une première extrémité est encastrée en un point fixe et dont l'autre extrémité est reliée à l'échappement pour faire basculer l'échappement dans une première position lorsque la température est basse et pour faire basculer l'échappement dans sa seconde position lorsque la température est élevée.

L'association d'un secteur denté et d'un échappement d'horlogerie constitue un mécanisme connu pour sa simplicité, sa robustesse dans des conditions d'utilisation très défavorables, en particulier dans une ambiance chaude, et ne nécessitant aucune structure délicate ou compliquée.

Un tel mécanisme est adapté à être remis à zéro fréquemment à volonté.

Suivant une première version de l'invention, l'élément sensible à la chaleur est associé à un ressort antagoniste qui résiste sans s'opposer à sa déformation et exerce sur lui une contrainte l'obligeant à reprendre sa forme initiale à la température ordinaire.

Tous les composants du dispositif de l'invention sont peu onéreux et fiables.

Suivant une version intéressante de l'invention, l'élément sensible à la température est un élément allongé imbriqué dans un ressort à lame de façon qu'une partie médiane de l'élément soit d'un premier côté de la lame et que les deux branches partant de cette partie médiane passent respectivement dans deux ouvertures de la lame de façon que les extrémités de ces branches soient situées de l'autre côté de la lame par rapport à la partie médiane de l'élément.

Il n'y a ainsi ni usinage ni façonnage délicats et coûteux pour la mise en place de cet élément.

Suivant une version avantageuse de l'invention, la lame de ressort est encastrée dans un support à une de ses extrémités et a son autre extrémité libre qui sollicite une seconde lame de ressort dont une première extrémité est également encastrée dans un support et dont l'autre extrémité est encastrée de manière coulissante dans l'échappement, de telle façon que lorsque l'élément sensible à la chaleur se déforme, la première lame oblige la seconde lame à se déformer et à faire basculer l'échappement autour de son axe.

Cet agencement de l'élément sensible à la chaleur et des deux lames de ressort par simple encastrement simplifié au maximum les opérations de façonnage et de montage des composants du dispositif.

Suivant une version préférée de l'invention, le dispositif comporte un ressort qui fait tourner le secteur denté d'un cran à chaque basculement de l'échappement, et l'élément sensible à la chaleur est un élément en alliage à mémoire de forme.

Suivant un autre aspect de l'invention, l'appareil chauffant, notamment appareil culinaire tel qu'une friteuse, est caractérisé en ce qu'il comporte un dispositif conforme à l'invention, l'élément sensible à la chaleur de ce dispositif étant placé à proximité immédiate de la source de chaleur et étant adapté aux températures régnant dans ledit appareil.

D'autres particularités et avantages de l'invention apparaîtront dans la description détaillée ci-dessous.

Aux dessins annexés, donnés uniquement à titre non limitatif :
- la figure 1 est une vue partielle schématique en élévation, avec arrachements, de la partie inférieure d'un appareil culinaire comportant un dispositif conforme à l'invention ;
- la figure 2 est une vue en perspective très agrandie du dispositif schématisé à la figure 1 ;
- la figure 3 est une vue en perspective très agrandie de l'agencement de l'élément sensible à la température représenté à la figure 2 ;
- la figure 4 est une vue partielle de dessus de l'agencement de la figure 3 ;
- la figure 5 est une vue schématique de dessus du dispositif de la figure 2, l'agencement de la figure 3 étant représenté en coupe longitudinale suivant V-V à la figure 4 dans sa position à température ordinaire ;
- la figure 6 est une vue semblable à la figure 5, l'agencement étant dans sa position à haute température ;
- la figure 7 est une vue schématique partielle réduite semblable à la figure 5 d'un autre mode de réalisation du dispositif de l'invention.

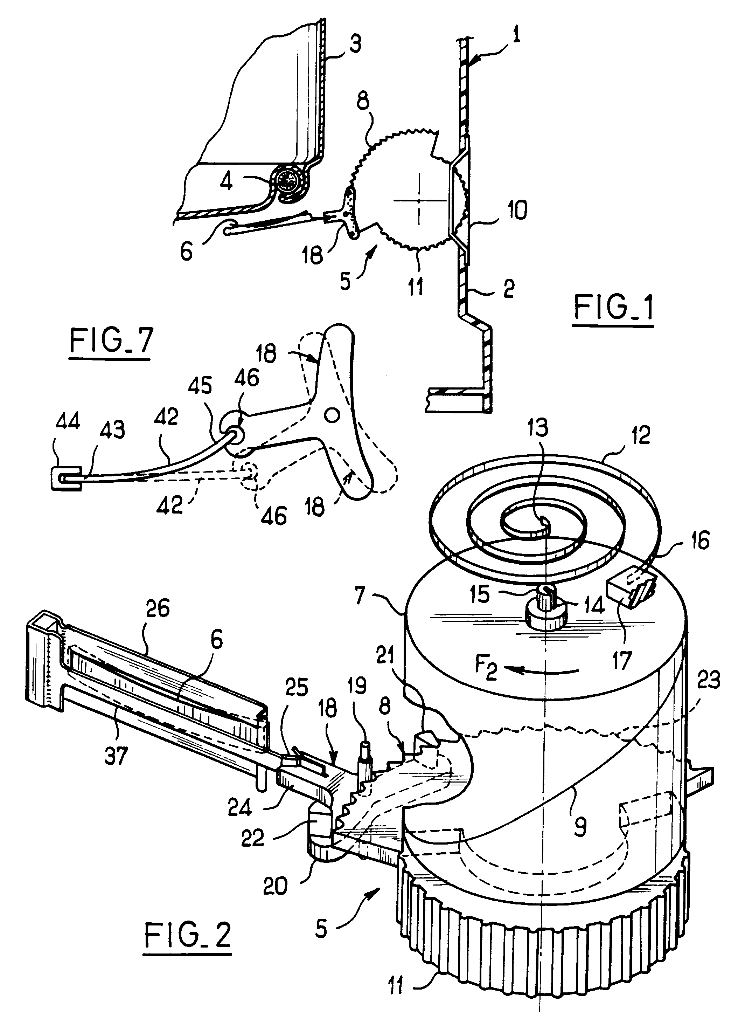

Dans la réalisation de la figure 1, un récipient culinaire tel qu'une friteuse 1 comporte une jupe extérieure 2 en matière plastique à l'intérieur de laquelle est suspendue une cuve 3 chauffée par une résistance électrique 4.

Dans la partie inférieure de cette friteuse est installé un dispositif 5 conforme à l'invention pour compter des cycles de dépassement d'un seuil de température prédéterminé.

Dans la réalisation représentée en détail à la figure 2, ce dispositif 5 comporte un élément 6 sensible à la chaleur susceptible de changer de forme lorsque la température dépasse un certain seuil T, agencé de manière à reprendre sensiblement sa forme initiale lorsque la température retombe au-dessous dudit seuil, un élément de signalisation 7 destiné à compter le nombre des dépassements dudit seuil et comprenant au moins un secteur denté 8, et des moyens pour faire tourner d'un cran le secteur denté 8 lors de la déformation de l'élément 6 sensible à la chaleur.

L'élément de signalisation 7 est, comme représenté, un cylindre 7, coaxial avec le secteur denté 8, dont l'axe est horizontal lorsque la friteuse est posée sur un plan horizontal. Sur la surface périphérique du cylindre 7 est dessinée une portion d'hélice 9 qui défile devant un regard 10 ménagé dans la jupe 2 de la friteuse 1 (voir figure 1), et qui permet à l'utilisateur de cette friteuse de suivre le nombre des utilisations de celle-ci, afin par exemple de changer en temps utile l'huile de friture et/ou le filtre à odeurs de cette friteuse.

Le cylindre 7 comporte également un secteur moleté 11 de même axe qui affleure la surface extérieure de la jupe 2 par le regard 10 et permet de tourner le cylindre 7 pour remettre à zéro le dispositif 5 et replacer le début de l'hélice 9 devant le regard 10.

Cette rotation du cylindre 7 permet également de retendre un ressort en spirale 12 dont l'extrémité intérieure 13 est insérée dans une fente 14 ménagée dans un tourillon 15 du cylindre 7, et dont l'extrémité extérieure 16 est insérée dans un taquet 17 fixe solidaire de la jupe 2.

Suivant l'invention, et comme représenté, le secteur 8 est un secteur de roue d'échappement connu en horlogerie, associé à un échappement à ancre 18. La fonction de ce mécanisme n'étant pas l'entretien du mouvement de balancement d'une pendule, les tracés des dents du secteur et des palettes de l'ancre sont tels que seule la fonction d'échappement est assurée.

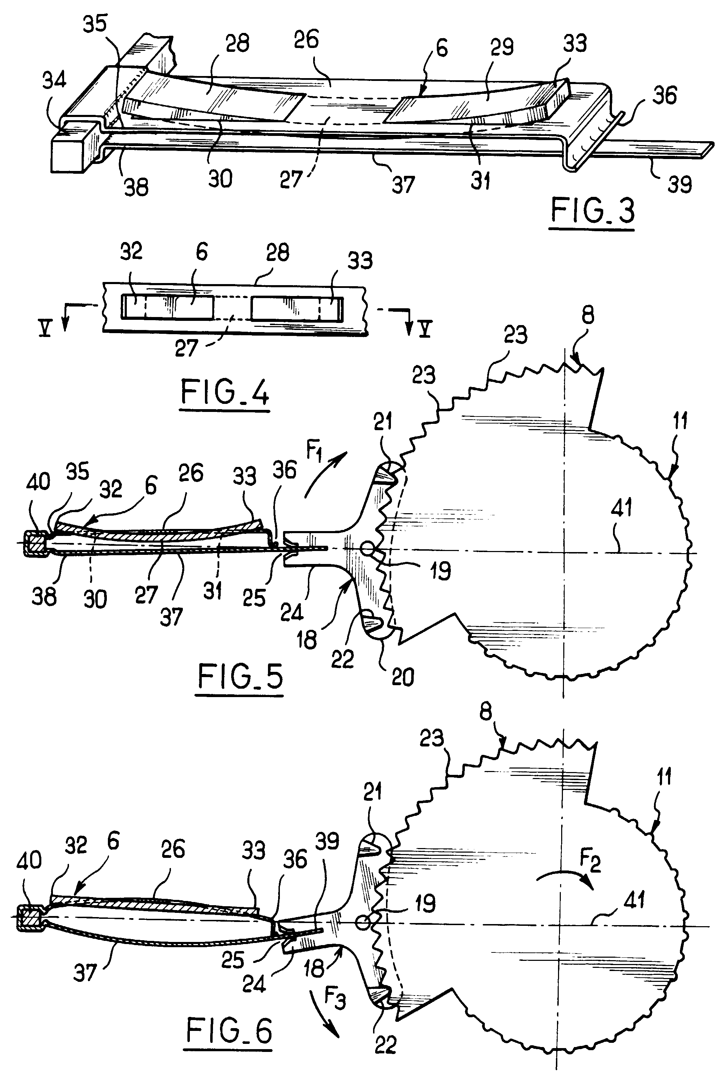

Le dispositif 5 comporte des moyens pour faire basculer l'ancre 18 dans sa première position de repos (voir figure 5) lorsque la température est inférieure audit seuil T et pour faire basculer l'échappement dans sa seconde position (voir figure 6) lorsque la température atteint et dépasse ledit seuil.

L'ancre 18 pivote autour d'un axe 19 parallèle à l'axe du cylindre 7 et porte, en saillie sur ses bras 20 qui passent sous le secteur denté 8, deux dents 21 et 22 qui viennent alternativement en prise avec les dents 23 du secteur denté 8 lorsque ladite ancre 18 bascule autour de son axe 19. A l'opposé des bras 20, l'ancre 18 présente une tête 21 comportant une fente radiale 25 dont on verra plus loin la fonction.

L'élément 6 sensible à la chaleur est, dans l'exemple représenté, un élément allongé en un alliage à mémoire de forme connu quelconque, par exemple en un alliage Cu-Al-Ni à 4 % en poids de nickel. On sait que la température conventionnelle T de début de transformation inverse austénitique d'un tel alliage varie comme suit en fonction de la teneur en aluminium (en poids) :

| % Al en poids | Température conventionnelle T de début de transformation austénitique (°C) |
|---|---|
| 13,0 | 140 |
| 13,1 | 110 |
| 13,2 | 86 |
| 13,25 | 84 |

Un tel élément, placé à 4 ou 5 mm de la résistance 4 de chauffage de la friteuse, est sensiblement aux environs de 100°C. Il faut donc choisir une teneur en aluminium voisine de 13,2 % dans un tel alliage pour que l'élément 6 passe de sa forme courbée, de structure martensitique, qu'il a à basse température et qui est schématisée à la figure 5, à sa forme sensiblement rectiligne, de structure austénitique, qu'il a à une température de l'ordre de 100°C et qui est représentée à la figure 6, lorsque l'on utilise la friteuse 1. Le seuil T précité est ainsi voisin de 85 ou 90°C.

On sait qu'un tel élément 6 est utilisé de préférence associé à un ressort antagoniste 26 qui résiste sans s'opposer à sa déformation lorsque la température atteint et dépasse le seuil précité T, et qui exerce sur lui une contrainte l'obligeant à reprendre sa forme initiale lors du retour à la température ordinaire. Lorsque la température atteint et dépasse le seuil T, cet élément 6 se déforme pour prendre la forme correspondant à sa structure austénitique, en fournissant un travail. Ce travail permet notamment de vaincre la force antagoniste du ressort 26.

On sait également que cette transformation, dite inverse, s'effectue complètement dans une plage de température relativement étroite, de sorte que l'élément 6 est capable de compter de manière fiable, reproductible et durable, les utilisations successives de la friteuse 1. Il est à noter que ce niveau de température, de l'ordre de 80 à 100°C, est particulièrement bien adapté aux alliages à mémoire de forme.

Comme l'illustrent en particulier les figures 3 à 6, l'élément 6 sensible à la chaleur est un élément allongé imbriqué dans un ressort à lame 26 de façon qu'une partie médiane 27 de l'élément 6 soit d'un premier côté de la lame 26 et que les deux branches 28, 29 partant de cette partie médiane 27 passent respectivement dans deux ouvertures 30, 31 de la lame 26 afin que les extrémités 32, 33 de ces branches 28, 29 soient situées de l'autre côté de la lame 26 par rapport à la partie médiane 27 de l'élément 6.

L'élément 6 est ainsi bloqué dans la lame 26, et aucune opération d'usinage, de perçage, de formage, n'est nécessaire pour sa fixation. L'élément 6 peut ainsi être simplement découpé dans une plaque ou être un tronçon de fil méplat, et est donc relativement peu onéreux.

Comme l'indiquent les figures, la lame 26 est encastrée dans un support 34 (voir figure 3) à une 35 de ses extrémités et a son autre extrémité libre 36 qui sollicite une seconde lame de ressort 37 dont une première extrémité 38 est également encastrée dans un support et dont l'autre extrémité 39 est encastrée d'une manière coulissante dans la fente 25 de la tête 24 de l'ancre 18. Ainsi, lorsque l'élément 6 sensible à la chaleur se déforme sous l'effet d'une élévation de température, la première lame 26 oblige la seconde lame 37 à se déformer et à faire basculer l'ancre 18 autour de son axe 19.

En fait, les deux lames 26 et 37 sont d'une seule pièce et constituent les deux branches d'une lame unique encastrée dans un support 40 (voir figures 5 et 6).

Le fonctionnement du dispositif que l'on vient de décrire est le suivant.

A froid, le dispositif est dans la position représentée à la figure 5. L'élément 6 en alliage à mémoire de forme a sa forme courbée qui correspond à sa structure martensitique. Les lames 26 et 37 sont sensiblement rectilignes. L'ancre 18 a pour axe de symétrie l'axe 41 en traits mixtes qui relie les axes 19 et 40.

L'extrémité libre 36 de la lame 26 est sensiblement sur cet axe 41. L'ancre 18 est basculée dans le sens de la flèche F1, le sens horaire à la figure, la dent 21 étant en appui sur le flanc d'une dent 23 du secteur denté 8. Le ressort en spirale 12 a tendance à faire tourner le cylindre 7 dans le sens de la flèche F2, c'est-à-dire le sens horaire à la figure, et les dents 21, 22, 23 sont inclinées de telle sorte que cette position soit stable.

Lorsqu'on utilise la friteuse, l'élément 6 en alliage à mémoire de forme placé à proximité de la résistance 4 est soumis à une température qui augmente progressivement en passant par la température T de début de transformation inverse austénitique, et continue à s'élever jusqu'à une température maximum de l'ordre de 130° C. Dès que le seuil T est atteint, l'élément 6 se déforme relativement rapidement pour prendre la forme sensiblement rectiligne représentée à la figure 6, et qui correspond à sa structure austénitique. Les extrémités 32 et 33 de l'élément 6 obligent la lame 26 à prendre la forme courbée représentée à la figure 6, et l'extrémité 36 de la lame 26 appuyant sur la lame 37 fait basculer l'ancre 18 dans le sens de la flèche F3 jusqu'à ce que la dent 22 de l'ancre soit en appui sur le flanc de la dent correspondante 23 du secteur denté 8. Le cylindre tourne ainsi d'un cran dans le sens de la flèche F2. En fin d'utilisation, la température baisse et l'élément 6 reprend sa forme représentée à la figure 5 sous la contrainte qu'exercent les lames 26 et 37, le tambour tournant encore d'un cran dans le sens F2.

On peut remettre à zéro le cylindre 7 en actionnant le secteur moleté 11 dans le sens inverse de la rotation résultant de l'échappement, c'est-à-dire le sens anti-horaire à la figure. Cette remise à zéro a également pour fonction de remettre le ressort spirale 12 sous tension maximum.

Ce mouvement de rotation de sens inverse, impossible à réaliser sur un véritable échappement à ancre d'horlogerie, est rendu ici possible grâce à l'inclinaison des dents 23. Ces dents 21 et 22 de l'ancre peuvent en effet être repoussées par le flanc peu incliné des dents 23, alors qu'elles restent en butée contre le flanc opposé, celui-ci présentant une forte inclinaison.

Bien entendu, l'invention n'est pas limitée au mode de réalisation que l'on vient de décrire, et on peut apporter à celui-ci de nombreux changements et modifications sans sortir du domaine de l'invention.

L'élément 6, pourrait être remplacé par un bilame remplissant les mêmes fonctions et conçu pour se déformer aux température en jeu.

Compte tenu des forces et des courses mises en jeu, il serait nécessaire de doubler la longueur de l'élément thermosensible. Par exemple, dans l'exemple décrit, l'élément d'alliage à mémoire de forme fait environ 25 mm. Réalisé à l'aide d'une lame bimétallique, celle-ci devrait avoir au moins une longueur de 50 mm environ.

Dans la réalisation de la figure 7, l'élément 42 sensible à la chaleur a une première extrémité 43 encastrée dans un support fixe 44 et a son autre extrémité 45 accouplée à l'ancre 18 par des moyens 46 capables de faire passer l'échappement 18 de sa première à sa seconde position lorsque la température atteint ledit seuil T et que l'élément 42 sensible à la chaleur se déforme, et vice versa. Cet élément 42, réalisé en un alliage à mémoire de forme, a subi un traitement thermomécanique d'éducation lui permettant de reprendre sensiblement sa forme initiale sans l'assistance d'un ressort tel que la lame 26. On peut ainsi supprimer les lames 26 et 37 et commander directement le basculement de l'ancre 18 par cet élément 42.

La liaison entre l'élément 42 et l'ancre 18 s'effectue par exemple par une ouverture en croissant 46 découpée à l'extrémité de la tête de l'ancre et entre les pointes de laquelle est engagée l'extrémité 45 de l'élément 42. Ainsi, la seule transformation de l'élément 42 au seuil de température T suffit à faire basculer l'ancre 18 de sa position à la température ordinaire, représentée en traits pleins, à sa position à haute température, représentée en tirets à la figure.

On pourrait également utiliser d'autres moyens de mise en rotation du cylindre 7, en remplacement du ressort spirale 12. Par exemple, on peut envisager un ressort hélicoïdal disposé concentriquement à l'axe de rotation du cylindre et disposé, soit dans le cylindre lui-même, soit dans son prolongement. On peut envisager également une action tangentielle sur le cylindre 7, par enroulement d'un fil et mise sous tension élastique dudit fil par un ressort d'extension.

On pourrait également remplacer les lames 26, 37 par des moyens équivalents, par exemple des ressorts à boudin, l'échappement à ancre 18 par un échappement d'un autre type, et de manière plus générale les différents composants et caractéristiques du dispositif conforme à l'invention par des éléments équivalents.

On pourrait également compléter le dispositif décrit en lui adaptant plusieurs roues dentées de façon à compter de manière irréversible toutes les utilisations de la friteuse tout en pouvant remettre à zéro le cylindre 7 dès que l'on a changé l'huile de friture.

On a décrit le dispositif dans le cadre de son utilisation sur une friteuse : on peut évidemment utiliser ce dispositif sur toutes sortes d'appareils, culinaires ou non, dont l'utilisation s'accompagne de phénomènes thermiques et de cycles susceptibles d'être comptés, l'élément sensible à la chaleur étant choisi de façon à être adapté aux températures réellement en jeu dans chaque utilisation particulière.

## Revendications

1. Appareil culinaire chauffant comportant un dispositif (5) pour compter les utilisations dudit appareil chauffant, ledit dispositif (5) comprenant:
- un élément (6) sensible à la chaleur et susceptible de changer de forme sous l'action de la température, ledit élément (6) ayant une extrémité encastrée dans un point fixe (44) et étant associé à un ressort antagoniste (26),
- un élément de signalisation du nombre de cycles d'utilisation, sous forme d'un cylindre (7),
- un secteur moleté (11) de même axe que le cylindre (7),
- des moyens reliant l'élément (6) et l'élément de signalisation (7), lesdits moyens comprenant au moins un secteur denté (8) coaxial au cylindre (7), associé à un échappement à ancre (18) basculant autour de son axe (19), ledit échappement à ancre (18) étant accouplé à l'autre extrémité (45) de l'élément (6),
- un ressort (12) agissant comme élément moteur sur le cylindre (7),
l'élément sensible (6) changeant de forme au cours d'un cycle sous l'effet du chauffage, le ressort (26) résistant sans s'opposer à la déformation de l'élément (6) lorsque la température atteint et dépasse un seuil (T) et exerçant sur lui une contrainte l'obligeant à reprendre sa forme initiale lors du retour à la température ordinaire, tandis que, au cours du même cycle, l'élément de signalisation (7), grâce aux moyens qui le relient à l'élément sensible (6), tourne d'un cran.

2. Appareil culinaire chauffant conforme à la revendication 1, caractérisé en ce que la remise à zéro entraîne en rotation le cylindre (7) et permet de retendre le ressort (12).

3. Appareil culinaire chauffant conforme à l'une quelconque des revendications 1 ou 2, caractérisé en ce que l'élément (6) sensible à la chaleur est un élément allongé imbriqué dans un ressort à lame (26), une partie médiane (27) de l'élément (6) étant d'un premier côté de la lame (26) tandis que les deux branches (28, 29) partant de cette partie médiane (27) passent respectivement dans deux ouvertures (30, 31) de la lame (26), les extrémités (32, 33) de ces branches (28, 29) étant situées de l'autre côté de la lame (26) par rapport à la partie médiane (27) de l'élément (6).

4. Appareil culinaire chauffant conforme à la revendication 3, caractérisé en ce que la lame (26) est encastrée dans un support (34) à une de ses extrémités (35), en ce que son autre extrémité libre (36) sollicite une seconde lame de ressort (37) dont une première extrémité (38) est également encastrée dans un support (34) et dont l'autre extrémité (39) est reliée à l'échappement (18), et que lorsque l'élément (6) sensible à la chaleur se déforme, la première lame (26) oblige la seconde lame (37) à se déformer et à faire basculer l'échappement (18) autour de son axe (19).

5. Appareil culinaire chauffant conforme à la revendication 4, caractérisé en ce que la seconde lame (37) a son autre extrémité (39) encastrée dans l'échappement (18).

6. Appareil culinaire chauffant conforme à l'une quelconque des revendications précédentes, caractérisé en ce que l'élément (42) sensible à la chaleur a une première extrémité (43) encastrée dans un support fixe (44) et a son autre extrémité (45) reliée à l'échappement (18) par des moyens (46) capables de faire passer l'échappement (18) de sa première à sa seconde position lorsque l'élément (42) sensible à la chaleur se déforme, et vice versa.

7. Appareil culinaire chauffant conforme à l'une quelconque des revendications précédentes, caractérisé en ce que l'élément (6) sensible à la chaleur est un bilame ou un élément en alliage à mémoire de forme.

8. Appareil culinaire chauffant conforme à la revendication 7, l'élément sensible à la chaleur étant un élément en alliage à mémoire de forme, caractérisé en ce que cet élément a subi un traitement thermomécanique d'éducation et reprend par lui-même sa forme initiale après chaque cycle.

9. Appareil culinaire chauffant tel que friteuse (1), caractérisé en ce qu'il comporte un dispositif (5) conforme à l'une quelconque des revendications 1 à 9, l'élément (6) sensible à la chaleur de ce dispositif (5) étant placé à proximité immédiate de la source de chaleur (4).

## Claims

1. Heating kitchen apparatus comprising a device (5) for counting the uses of said heating apparatus, said device (5) consisting of:
- an element (6) sensitive to heat and capable of changing shape under the effect of temperature, said element (6) having an end fitted into a fixed point (44) and being associated with an opposing spring (26),
- an element for signalling the number of cycles of use, in form of a cylinder (7),
- a knurled sector (11) with the same axis as the cylinder (7),
- means connecting said element (6) and said signalling element (7), said means comprising at least a cogged sector (8), coaxial to the cylinder (7), associated with an anchor escapement (18) swinging round its axis (19), said anchor escapement (18) being coupled to the other end (45) of element (6),
- a spring (12) acting as driving element on the cylinder (7),
said sensitive element (6) changing its shape during one cycle under the effect of heating, said spring (26) resisting without opposing the deformation of said element (6) when temperature reaches and exceeds a threshold (T) and exerting stress on it causing it to recover its original shape upon returning to ordinary temperature, while during the same cycle, said signalling element (7), through means connecting it to the sensitive element (6), rotates by one step.

2. Heating kitchen apparatus according to claim 1, characterized in that resetting causes the cylinder (7) to rotate and allows for restretching of the spring (12).

3. Heating kitchen apparatus according to any of claims 1 or 2, characterized in that said heat sensitive element (6) is an elongated element embedded in a leaf spring (26), a median part (27) of said element (6) being on one first side of the leaf (26) whilst the two branches (28,29) from this median part (27) cross apertures (30, 31) of said leaf (26) respectively, the ends (32, 33) of these branches (28, 29) being located on the other side of said leaf (26) relatively to the median part (27) of said element (6).

4. Heating kitchen apparatus according to claim 3, characterized in that said leaf (26) is fitted into a carrier (34) at one of its ends (35), in that its other free end (36) accesses a second spring leaf (37), a first end (38) of which is also fitted into a carrier (34) and the other end (39) of which is connected to the escapement (18), and that when the heat sensitive element bends, the first leaf (26) causes the second leaf (37) to bend and the escapement (18) to swing round its axis (19).

5. Heating kitchen apparatus according to claim 4, characterized in that the second leaf (37) has its other end (39) fitted into the escapement (18).

6. Heating kitchen apparatus according to any of the above claims, characterized in that the heat sensitive element (42) has a first end (43) fitted into a fixed carrier (44) and has its other end (45) connected to the escapement (18) by means (46) for causing the escapement (18) to move from its first to its second position when the heat sensitive element (42) bends, and vice-versa.

7. Heating kitchen apparatus according to any of the above claims, characterized in that the heat sensitive element (6) is a bimetallic strip or a shape memory alloy element.

8. Heating kitchen apparatus according to claim 7, the heat sensitive element being a shape memory alloy element, characterized in that this element is subjected to a thermomechanical training process and recovers per se its original form after each cycle.

9. Heating kitchen apparatus such as a fryer (1), characterized in that it comprises a device (5) according to any of claims 1 to 8, with the heat sensitive element (6) of this device (5) placed in direct vicinity of the heat source (4).

## Patentansprüche

1. Wärmendes Küchengerät, das eine Vorrichtung (5) aufweist, um die Anzahl Benützungen dieses obigen Geräts zu zählen, wobei die obige Vorrichtung (5) folgendes umfasst:
- ein wärmeempfindliches und unter dem Einfluss der Temperatur formveränderliches Element (6), wobei das obige Element (6) ein an einem festen Punkt (44) eingespanntes Ende hat und mit einer gegenwirkenden Feder (26) verknüpft ist.
- ein die Anzahl Benützungzyklen meldendes Element in Form eines Zylinders (7),
- einen Rändelrad-Abschnitt (11) mit der gleichen Achse wie der Zylinder (7),
- Mittel zum Verbinden des Elements (6) mit dem meldenden Element (7), wobei die obigen Mittel wenigstens einen zum Zylinder (7) koaxialen Zahnrad-Abschnitt (8) umfassen, der mit einer um seine Achse (19) schwenkenden Ankerhemmung (18) verbunden ist, wobei die Ankerhemmung (18) an das andere Ende (45) des Elements (6) angekoppelt ist,
- eine als Antriebselement auf den Zylinder (7) wirkende Feder (12),
wobei das empfindliche Element (6) seine Form unter dem Einfluss der Heizung im Laufe eines Zyklus verändert und die Feder (26) bei Erreichen und Überschreiten eines Temperatur-Grenzwertes (T), ohne gegen die Verformung des Elements (6) zu wirken, widersteht und Druck auf ihn ausübt, wodurch sie ihn zwingt, bei Rückkehr zur üblichen Temperatur wieder in seine ursprüngliche Form anzunehmen, während sich das meldende Element (7) im Laufe des gleichen Zyklus durch die Mittel, die es mit dem empfindlichen Element (6) verbinden, einen Schritt weiterdreht.

2. Wärmendes Küchengerät gemäss dem Anspruch 1, dadurch gekennzeichnet, dass das Rücksetzen den Zylinder (7) in Drehung versetzt und sich die Feder (12) wieder spannen lässt.

3. Wärmendes Küchengerät gemäss einem der Ansprüche 1 oder 2, dadurch gekennzeichnet, dass das wärmeempfindliche Element (6) ein in einer Blattfeder eingebettetes längliches Element (26) ist, wobei ein mittleres Teil des Elements (6) auf einer ersten Seite liegt (26), während die beiden Zweige (28,29), die von diesem mittleren Teil (27) ausgehen, in zwei jeweilige Öffnungen (30, 31) des Blattes (26) laufen und die Enden (32,35) dieser Zweige sich bezüglich des mittleren Teils (27) des Elements (6) auf der anderen Seite des Blattes (26) befinden.

4. Wärmendes Küchengerät gemäss dem Anspruch 3, dadurch gekennzeichnet, dass das Blatt (26) in einem Träger (34) an einem seiner Enden (35) eingepannt ist, dass sein anderes freies Ende (36) ein zweites Federblatt (37) beansprucht, dessen erstes Ende (38) auch in einem Träger (34) eingepannt ist und dessen anderes Ende (39) mit der Hemmung (18) verbunden ist, und dass, wenn das wärmeempfindliche Element (6) sich verbiegt, das erste Blatt (26) das zweite Blatt (37) sich verbiegen und die Hemmung (18) sich um ihre Achse (19) drehen lässt.

5. Wärmendes Küchengerät gemäss dem Anspruch 4, dadurch gekennzeichnet, dass das andere Ende (39) des zweiten Blattes (37) in der Hemmung (18) eingespannt ist.

6. Wärmendes Küchengerät gemäss einem der vorhergehenden Ansprüche, dadurch gekennzeichnet, dass das wärmeempfindliche Element (42) ein erstes in einem festen Träger (44) eingespanntes Ende (43) und ein anderes Ende (45) aufweist, das mit der Hemmung (18) durch Mittel (46) verbunden ist, um die Hemmung (18) aus ihrer ersten Position in ihre zweite Position bewegen zu lassen, wenn sich das wärmeempfindliche Element (42) verformt, und umgekehrt.

7. Wärmendes Küchengerät gemäss einem der vorhergehenden Ansprüche, dadurch gekennzeichnet, dass das wärmeempfindliche Element (6) ein Bimetallstreifen oder eine Formgedächtnislegierung ist.

8. Wärmendes Küchengerät gemäss dem Anspruch 7, wobei das wärmeempfindliche Element (6) eine Formgedächtnislegierung ist, dadurch gekennzeichnet, dass dieses Element durch eine thermische und mechanische Behandlung trainiert worden ist und nach jedem Zyklus wieder von selbst seine ursprüngliche Form annimmt.

9. Wärmendes Küchengerät wie etwa eine Friteuse (1), dadurch gekennzeichnet, dass es eine Vorrichtung (5) gemäss einem der Ansprüche 1 bis 8 aufweist, wobei das wärmeempfindliche Element (6) dieser Vorrichtung (5) in unmittelbarer Nähe der Wärmequelle (4) angelegt ist.
